# EUROPEAN PATENT SPECIFICATION

(11) **EP 0 768 969 B1**
(45) Date of publication and mention of the grant of the patent: **30.08.2000**
(21) Application number: 96914383.3
(22) Date of filing: 09.05.1996
(51) Int. Cl.: B62M 1/12

(54) **AN ARM PROPULSION SYSTEM FOR BICYCLES AND SIMILAR, THAT MAY BE COMBINED WITH THE CONVENTIONAL FOOT PROPULSION**
FAHRRAD MIT ZUSÄTZLICHEM ARMANTRIEB
SYSTEME DE PROPULSION A BRAS POUR BICYCLETTES ET VEHICULES SIMILAIRES POUVANT ETRE COMBINE AU SYSTEME TRADITIONNEL DE PROPULSION PAR LES JAMBES

(30) Priority: 10.05.1995 IT PD950091; 05.07.1995 IT PD950140; 22.03.1996 IT PD960073
(43) Date of publication of application: 23.04.1997
(73) Proprietor: Rigato, Fabrizio, 30027 San Donà di Piave (IT)
(72) Inventor: Rigato, Fabrizio, 30027 San Donà di Piave (IT)
(74) Representative: Mascioli, Alessandro, Prof.Dr.
(86) International application number: PCT/IT96/00095
(87) International publication number: WO 96/35605

(56) References cited:
- EP-A- 0 285 115
- CA-A- 1 273 373
- CH-A- 219 564

## Description

The present invention concerns an arm propulsion system for bicycles, that may be combined with the conventional foot propulsion, consisting of two cranks fixed at the end of a connection and rotation axle in a specular position to each other, whereby at the free ends thereof hand-grips are connected, liying and rotating on one and the same axis, parallel to said axle connecting the cranks which are in turn connected, by means of a sprocket wheel and a chain or a small shaft or a belt or similar, to the front wheel, wherein said sprocket wheel, that is coaxial with the axle that connects the cranks, rotates in idle gear around said axle and has on one side a radially toothed surface that gets engaged with one or two identically toothed surfaces present on the sides of a connection element that is linked to rotate with the axle, making the sprocket wheel linked or unlinked to the cranks' axle, according to the motion of said axle or of said connection element only.

It is known that the greatest limitation in the use of the conventional bicycles consists in the activation of the sole muscles of the legs, while the arms provide for the direction, stabilization and braking of the bicycle, without performing any pulling force.

For solving above mentioned disadvantage, the prior art lists many systems for applying motion to bicycles, comprising the combination of the action of legs and pelvis or even of legs and arms.

All mentioned systems determine however a scarce balance for the user and/or a reduced manoeuvrability and/or make use of very complicate, expensive and too heavy mechanisms.

In U.S. patent No. 632.797 granted on 12th September 1899 to G. VAN HORN, a bycicle is described with a handle-bar having the form of cranks and used for realizing a pulling force with the arms with a connection with the back wheel. This rotating handle-bar rotates a toothed wheel which in turn is connected, by means of a very long chain, to another sprocket wheel provided nearby the conventional sprocket wheel operated by the pedals.

The disadvantage of said patent consists in that the extremely long, continuous chain - from the handle-bar to the pedal-hub, is twisted in the moment in which the handle-bar is turned for directing the bicycle.

Many years later, this problem has been faced in Canadian patent no. 606713 of Ernesto Nacar who, starting from the bicycle of G. VAN HORN, has tried to prevent the twisting of the chain that connects to rotating handle-bar to the pinion of the pedals that move the rear wheel, thus obtaining a considerable series of gears connected to transmission shafts and chains, that seemed to allow the adhesion of the chain even when the handle-bar was turned. Said mechanism is very complex and presumably very heavy.

The application of the pulling force, with direct connection to the front wheel instead to the back wheel, is shown in Italian patent application no. 48237 A/86 in the name of Roberto MEZZINI, in which a fork made integral with the central tube that usually supports the handle-bar, directed with the prongs upwards and provided, at the upper end, with a pedal keyboard placed in such a way as to be operated by the hands of the cyclist and that is connected, by means of a chain, to the hub of the front wheel provided with a pinion.

The bicycle is provided with counter-pedal brakes inserted in the hub.

This kind of bicycle makes use of a movement equal to the one produced by the legs by applying the same kind of pedals near the handle-bar.

The evident disadvantage of said means is the lack of stability and the difficulty in directing the bicycle, as the arms are to be hold in positions never specular to each other, as it occurs with a conventional handle-bar. The same inventor has tried to solve this problem in his own, further patent application no. RM 95 A 000 608 of 12th September 1995 in which, together with the pedal-keyboard, a second, fix handle-bar and a second saddle are provided, mounted near the fix handle-bar, and onto which the cyclist should rest his brest for finding a better balance while driving a double-traction bicycle.

Further essays of creating a double-traction bicycle, by the use of levers or lever systems, have been performed, e.g., by Antonio GOMEZ ZARCO in his Spanish patent application no. 523432 of 21st June 1983, and by Horst EIFLER in his German patent no. DE 243677A1.

Said bicycle means want to create an auxiliary traction onto the back wheel, making use of the arms of the cyclists which pull levers or the same handle-bar.

Furthermore, European Patent Application EP-A-0 285 115 id known, characterized in the presence of an upper support to the upper part of the frame and a hand wheel mounted on said upper support and provided with handles that guide the hand wheel and are manually actuable by the driver. Gears are mounted on the upper support and a loop connects the hand wheel and the gears, whereby rotation of the hand wheel causes rotation of the gears. Locking devices are provided to detachably lock the hand wheel to the upper support so that the handle and the loop remain in fixed position. A gear is axially mounted on the front wheel and a chain connects said gear to the gears whereby the gears are rotatable with the handle.

The result shows a considerable lack of stability of the means and very complicate mechanisms.

The arm propulsion system according to the present invention, on the contrary, has prooved to be totally stable, of easy conduction, manoeuvrability and safeness, showing a box with a rigid structure that keeps the crank system provided with a radial toothed surface near a connection element so that, leading said connection element towards said box in a direction opposite to the sprocket wheel, the latter is made free to rotate around the cranks' axle, while said axle is made integral with the box.

The system described hereinbelow concerns the application of the transmission of motion to the front wheel of any kind of cycle, also in replacement and/or support of already existing structures, obtaining a completely independent traction system, operated by the muscle force of the arms and that may be used in combination or in alternative to the conventional one.

According to the present invention, the arm propulsion system that may be combined with the conventional foot propulsion, without the inconveniences described of the other system with mixed propulsion, comprises a crank system placed near the conventional handle-bar; as the pair of cranks are connected to the handle-bar support, it follows the handle-bar each time the direction of the bicycle is varied.

Thus, the cyclist uses the fix handle-bar in a conventinal manner only for changing direction or braking. In alternative, if he grasps the cranks he may use the front traction performing a synchronous circular and parallel movement with the arms and hands that is perfectly balanced, and in the same time he may intervene on the direction of the means.

Infact, during the motion the cyclist may easily control and direct the bicycle as the forces exerced by the arms and hands onto the cranks are always the same, and therefore do not cause oscillations or lateral forces onto the front fork.

Furthermore, laterally moving the stillstanding or rotating cranks as if they were the handle-bar, the front wheel may be perfectly directed and thus the whole cycling means.

In a possible variant according to the present invention, the system provides the elimination of the conventional, fix handle-bar: in this case, the function of the fix handle-bar is obtained applying a mechanism that allows the eventual blocking to the rotating movement of the cranks which, once blocked but still connected to the handle-bar support, become a perfect handle-bar. Or, if they get not blocked, they are free to rotate and therefore to transmit motion, even if continuing to direct the bicycle.

Once said cranks are blocked, the inconvenience may consist in that during the reverse motion - e.g. for moving the bicycle - the front wheel of the bicycle transmits the movement, by means of the chain, to the sprocket wheel integral with the axle connecting the cranks; if the latter are blocked, they prevent the reverse revolution of said front wheel and the bicycle must be pulled backwards.

It is the aim of the system according to the present invention to solve all above mentioned inconveniences, and for this purpose a preferred and perfectly working variant thereof provides:
- a particular system for blocking the cranks that allows, once operated, that the primary sprocket wheel remains free to rotate on its axle and therefore does not transmit the movement of the front wheel to said cranks if the bicycle is to be moved in reverse motion;
- a chain transmission system with reduction gear with a plurality of gears of different diameters, against the already described variant that provides any transmission system from the cranks to the front wheel, reaching three purposes:
   - a smaller front encumbrance;
   - a better look;
   - a greater safety in case of accidental crashed, as said system is coated in a protection housing of small dimensions, like a box;
- a system for blocking the hand-grips, independent from the crank block;
- the assemblying of the brake levers in a conventional manner, wherein the cables are always kept in predetermined positions for preventing the twisting thereof, without hindering the rotation of the cranks.

The system according to the present invention, comprising two cranks mounted in specular way at the ends of a rotation axle that connects the same; two hand-grips that allow to grasp the cranks, which may be free to rotate idle on their own axis, or which may be blocked against the cranks; and consists of :
- a fork support connected to the handle-bar connection, that allows the housing of the rotation axle of the cranks mounted on bearings, and of two sprocket wheels and of the chain connecting them, which are part of the reduction gear system;
- a cylindric, "connection" element, coaxial and integral with the rotation axle that connects the cranks, wherein said element has, on both lateral surfaces, shapings in the form of a tooth or of a step or other, so as to be inserted on one side in identical, shaped surfaces provided on one side of the bigger sprocket wheel, and on the other side on identical shaped surfaces provided on an internal side of a fork support box;
- a coaxial sprocket wheel, mounted on the axle for the rotation and connection between the two cranks in such a way as to be free for rotating, and being connected by means of a toothed chain or gear to a smaller sprocket wheel, both clothed in a container, called "box";
- a third sprocket wheel that is fixed by means of a central pin and in coaxial manner to the smaller sprocket wheel, that is in turn connected to the hub of the front wheel of the bicycle by means of a toothed chain or other transmission like, e.g., a belt or a small shaft etc.

It shall be underlined that the whole axle may be moved by means of a selecting mechanism towards the bigger sprocket wheel or towards the wall opposite to the bigger sprocket wheel of said box; in the first case it will get stuck in the lateral wall of the crown and thus allowing the traction by means of the cranks; vice versa, if the rotation axle is approached to the opposite wall, it will get stuck in the wall of the box that is fix, with the consequent blocking of said cranks.

In an equivalent, functional variant, the axle for the rotation and the connection of the cranks does not laterally move; only the cylindric connection means moves. In that case, the cylindric connection element, coaxial to the axle of the cranks, has a central, shaped hole that slides along the axle of the cranks, rotating together with the same.

When the connection element is laterally moved, by means of appropriate levers or similar, the connection element is linked to the bigger sprocket wheel, coaxial with the crank axle and therefore to said axle, or to the fix part of the structure, thus hindering the rotation of the cranks' axle.

Once the cyclist has decided to use the front traction, he will move the connection element towards the sprocket wheel that will get stuck onto said connection element, and operating onto the hand-grips with a circular and parallel synchronous movement arms-hands, the forwad motion of the axle will be obtained that will move the toothed crown which in turn will transmit the motion to the front wheel of the bicycle.

The optimal combination of said reduction gear provides the use of a sprocket wheel coaxial to the cranks' axle, comprising thirty teeth and conneted, by means of a chain of the kind of an eight-pitch, with a nine-teeth sprocket wheel.

On axis, and pin-connected to said nine-teeth, a seventeen-teeth sprocket wheel is provided, and by a conventional chain is connected to the change gear of the front wheel of the bicycle. During the motion, the cyclist may control and direct the bicycle, because the force exerted by the cyclist onto the cranks is always equal and do therefore not cause oscillations or lateral forces onto the front fork; furthermore, moving the still or moving cranks forwards, also the front wheel is rotated, giving the bicycle any desired direction. Said crank-mechanism therefore works like a real handle-bar onto which the brake levers are mounted. When the cyclist wants to use the sole feet motion-traction, in particular in some cases as in the urban traffic, he may wish that the cranks are perfectly still, or that the cranks and also the hand-grips are perfectly still in any angular position.

For this purpose the selecting mechanism will move the connection element towards the rigid wall of the box, thus blocking the cranks, and then it will block the cranks by means of a system described hereinbelow.

The blocking system for the hand-grips provides for the coupling of two complementary surfaces like teeth or steps or other, one on the end of each crank and the other on the bottom of the hand-grip's cylinder.

When the hand-grips are approached to the centre of the bicycle, the surfaces get reciprocally engaged, hindering the relative rotation between hand-grips and cranks.

When the hand-grips are moved towards the external sides, the surfaces are also removed, allowing the hand-grips to freely rotate around the cranks. The shaped surfaces allow to block the hand-grips in many angular positions around their own axis, so as to allow the cyclist a variety of choice for grasping the grips.

A selecting system operated with a push-button hinders the accidental lateral movement of the hand-grips without the intention of the cyclist, assuring the free rotation or the blocking of the position of the hand-grips.

When he uses both blocks (crank blocks/ hand-grip blocks), the cyclist will ride a completely conventional bicycle.

The present invention will be described more in detail hereinbelow relating to the enclosed drawings in which a preferred embodiment is shown.

Figure 1 shows a front view of a bicycle with the arm propulsion system, while figure 2 shows a lateral view of the upper-front part of the bicycle.

Figures 3 and 4 show a section of hand-grips 10 mounted onto appropriate cylinders 11 and shaped with teeth or radial reliefs, as shown in figure 5.

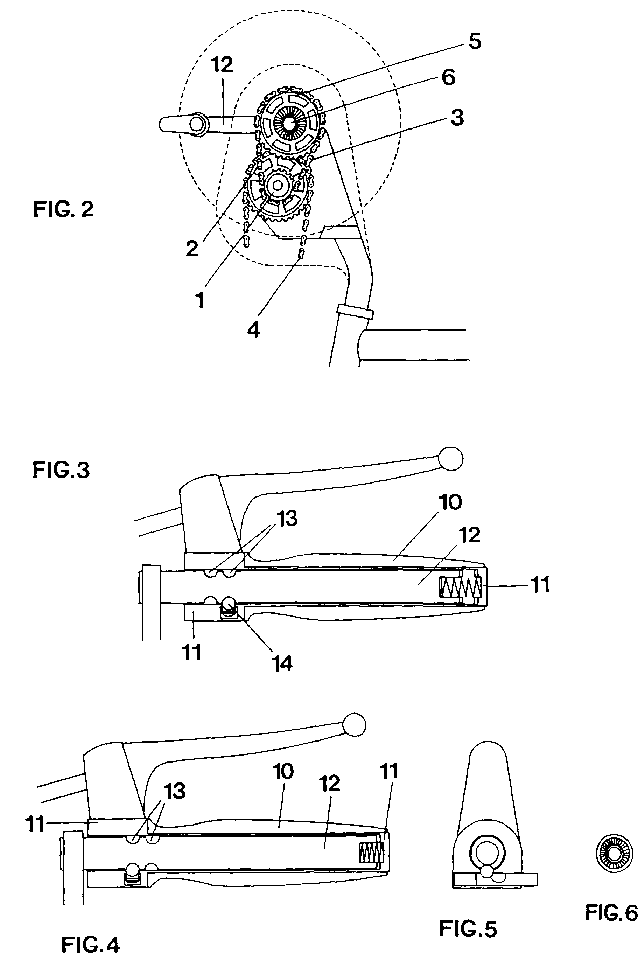

A section of the hand-grips 10 with a detail of the selection mechanism 14 is shown in figure 6.

In the described embodiment the case has been shown in which the sole axle of cranks rotates and the connection element moves along the axis of the cranks' axle.

The figures clearly show two coaxial sprocket wheels 1, 2 which are connected, by means of two chains 3, 4, the first to the primary sprocket wheel 5, rotating in idle gear around the rotation axle 6 of said cranks, and the second to change gear group fixed to the front wheel of the bicycle.

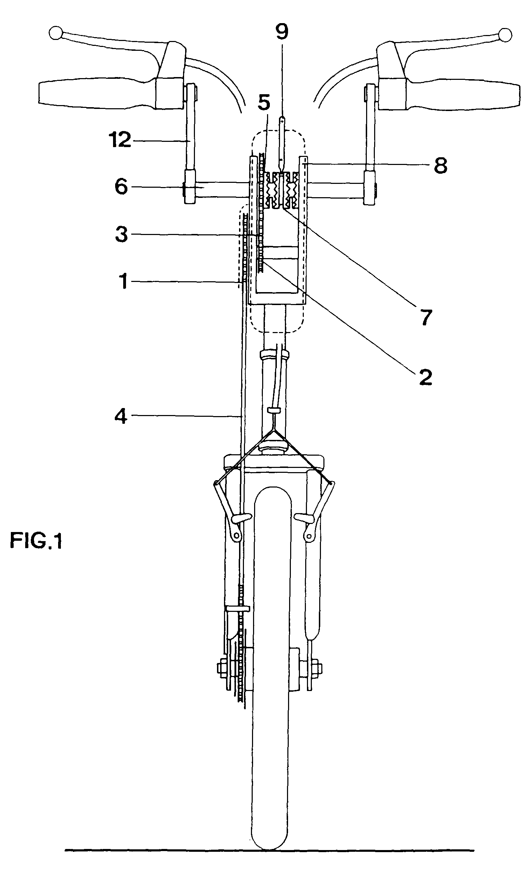

In detail, figure 1 shows a connection element 7 rotating together with the axle 6 of the cranks and sliding on the same. Said connection element 7 has on its two sides the toothed surfaces that get alternatively engaged with two identical surfaces provided for respectively on the side of the primary sprocket wheel 5, coaxial with the axle 6 of the cranks, or on a fix part of a box 8 supporting the cranks.

A suitable selecting system 9 allows to move the connection element 7 onto axle 6 for engaging the same with one or the other toothed surface.

Moving the hand-grips 10 and the respective cylinders 11 so as to move the two toothed surfaces away from each other - as shown in figure 3 - the hand-grips 10 may rotate around the cranks 12 while, moving the hand-grips 10 in the opposite direction - as shown in figure 4 - the two shaped surfaces of the cylinders 11 and of the cranks 12 are engaged, hindering the hand-grips 10 to move around the cranks 12.

Said cranks 12 have two ring-shaped grooves 13, placed at a suitable distance, into which a selecting device 14 gets inserted, that has the function of keeping the cylinders 11 and the hand-grips 10 in the two furthermost positions of freedom or blocking.

It is possible to provide for a series of gears, as an equivalent solution as an alternative to chain 3 and the respective sprocket wheels.

## Claims

1. An arm propulsion system for bicycles, that may be combined with the conventional foot propulsion, comprising two cranks (12) fixed at an end of a connection and rotation axle (6) in a specular position to each other, whereby at free ends thereof hand-grips (10) are connected, lying and rotating on the same axis, parallel to said axle connecting the cranks (12) and in turn connected, by means of a sprocket wheel (5) and a chain (3, 4) or a small shaft or a belt or similar, to the front wheel of the bicycle, wherein said sprocket wheel (5), that is coaxial with the axle (6) that connects the cranks (12), rotates in idle gear around said axle (6) and has on one side a radially toothed surface that gets engaged with one of two identical toothed surfaces present on the sides of a connection element (7) that is linked to rotate with the axle (6), making the sprocket wheel (5) linked or unlinked to the cranks' axle (6) according to the motion of said axle or of said connection element (7) only characterized in that a box (8) with a rigid structure, that keeps the crank system is provided with a radial toothed surface near said connection element (7) so that, leading said connection element (7) towards said box (8), in a direction opposite to the sprocket wheel (5), the latter is made free to rotate around the cranks' axle (6), while said axle is made integral with the box (8).

2. An arm propulsion system for bicycles according to claims 1, characterized in that it is provided with a reduction gear (1, 2, 3, 4) with a plurality of gears with different diameters, placed between sprocket wheel (5) coaxial with the connection axle (6) of the cranks and the change gear group of the bicycle's front wheel.

3. An arm propulsion system according to claims 1, 2 characterized in that the ends of the cranks (12) and the bottom of internal cylinders (11) of the hand-grips (10) each have a reciprocal toothed surface, and where a selecting mechanism (9) brings into contact the two surfaces of the cranks and of the internal cylinders (11) of the hand-grips (10) or moves them away, making the hand-grips (10) free to rotate around the cranks (12) or linked to the same.

4. An arm propulsion system for bicycles according to claims 1, 2, 3, characterized in that brake levers are placed on the cranks with the rotation fulcrum towards the support of the fork of the front wheel.

5. An arm propulsion system for bicycles according to claims 1, 2, 3, 4, characterized in that the sheathing of brake cables are guided by the box (8) so as not to hinder any movement of the cyclist.

## Patentansprüche

1. Armfortbewegungssystem für Fahrräder, das mit dem tradiotionellen Fussfortbewegungssystem verbunden werden kann, bestehend aus zwei Kurbeln (12), die am Ende einer Verbindungs- und Drehungsachse (6) in spiegelbildlicher Stellung zueinander befestigt sind, wobei mit ihren freien Enden Griffe (10) verbunden sind, die sich auf der gleichen Achse abstutzen und drehen, parallel zu besagter Verbindungsachse der Kurbeln (12), die mittels Zahnkranz (5) und Kette ( 3, 4) oder Welle oder Riemen oder ähnlichem mit dem Vorderrad des Fahrrades verbunden sind, wobei besagter Zahnkranz (5), koaxial mit der Achse (6), die die Kurbeln (12) miteinander verbindet, um besagte Achse frei läuft und auf einer Seite eine radial verzahnte Oberfläche aufweist, die mit einer von zwei genau gleichen, verzahnten Oberflächen einrastet, die auf den Seiten eines Verbindungselementes (7) vorhanden sind, das sich mit der Achse (6) drehen muss, wodurch das Zahnrad (5) mit der Kurbelachse (6) verbunden oder freigegeben wird, und zwar auf Grund der Bewegung besagter Achse oder nur besagten Verbindungselementes (7), dadurch gekennzeichnet, dass ein festes Gehäuse (8), das das Kurbelsystem einschliesst, mit einer radialen, verzahnten Oberfläche versehen ist, und zwar in der Nähe von besagtem Verbindungselement (7), und zwar derart dass, wenn besagtes Verbindungselement (7) in Richtung besagten Gehäuses bewegt wird, in entgegengesetzter Richtung des Zahnrades, dieses Zahnrad sich um die Achse der Kurbel drehen kann, während besagte Achse fest mit dem Gehäuse verbunden ist.

2. Armfortbewegungssystem für Fahrräder nach Anspruch 1, dadurch gekennzeichnet, dass es mit einem Untersetzungsgetriebe (1, 2, 3, 4) mit mehreren Zahnrädern verschiedenen Durchmessers versehen ist, wobei dieses Untersetzungsgetriebe zwischen dem Zahnrad (5) angeordnet ist, das koaxial zur Verbindugsachse (6) der Kurbel und der Gangschaltung des Vorderrades des Fahrrades liegt.

3. Armfortbewegungssystem für Fahrräder nach Anspruch 1 und 2, dadurch gekennzeichnet, dass die Enden der Kurbeln (12) und der Boden der inneren Zylinder (11) der Griffe (10) jeweils eine gegenseitig verzahnte Oberfläche aufweisen, und wo ein Auswahlmechanismus (9) die zwei Oberflächen der Kurbeln und der inneren Zylinder (11) der Griffe miteinander in Verbindung bringt oder sie distanziert, wodurch die Griffe (10) sich frei um die Kurbeln (12) bewegen können, oder von ihnen aufgehalten werden.

4. Armfortbewegungssystem für Fahrräder nach Anspruch 1, 2 und 3, dadurch gekennzeichnet, dass Bremshebel auf den Kurbeln befestigt sind, und zwar mit dem Drehpunkt auf das Gabelrohr des Vorderrades ausgerichtet.

5. Armfortbewegungssystem für Fahrräder nach den Ansprüchen 1, 2, 3 und 4, dadurch gekennzeichnet, dass die Hüllen der Bremsdrähte durch das Gehäuse (8) des Untersetzungsgetriebes geführt werden, und zwar derart, dass sie die Bewegungen des Fahrradfahreres in keiner Weise behindern.

## Revendications

1. Système de propulsion à bras pour byciclettes, que peut être combiné avec la propulsion taditionelle à jambes et qui comprende deux manivelles (12) fixées à un bout d'un essieu (6) de jonction et de rotation en position speculaire etre eux, et ou sont connectés, à leurs extrémités libres, poignées de prise (10) qui s'appuyent et qui tournent sur le même axe, qui est parallèle à dit essieu de jonction de la manivelle (12), qui sont reliés au moyen d'une couronne dentée (5) et d'une chaine (3, 4) out petit arbre ou courroie ou semblable à la roue antérieure de la byciclette et ou dite couronne dentée (5) coxiale à l'essieu (6), qui connecte les manivelles (12), tourne à vide autour de dit essieu (6) et présente sur un coté une surface dentée radialement qui s'engage avec une des deux surfaces identiques dentées, qui se trouvent sur les cotés d'un élément de jonction (7), qui est engagé à tourner avec l'essieu (6) de façon à rendre la roue dentée (5) engagée ou dégagée de l'essieu (6) des manivelles, en fonction de la translation de dit essieu ou seulement de dit élément de jonction (7), caractérisé en ce que une boite (8) à structure rigide, qui supporte l'ensemble des manivelles, est dotée d'une surface dentée radiale en proximuté du dit élément de jonction (7) de façon telle que, dirigeant dit élément de jonction (7) en direction de dite boite (8), en direction opposée à la roue dentée, cette roue est libre de tourner autor de l'essieu (6) de la manivelle, tandis que dit essieu devient solidaire avec la boite (8).

2. Système de propulsion à bras pour byciclettes selon la revendication 1, caractérisé en ce qu'il est doté d'un dèmultiplicateur (1, 2, 3, 4) avec plusieurs engrenages à diamètres différents, disposé entre la roue dentée (5) coaxiale à l'essieu (6) de jonction des manivelles et le group de changement de vitesse de la roue antérieure de la byciclette.

3. Système de propulsion à bras pour byciclettes selon les revendications 1 et 2, caractérisé en ce que les extrémitées des manivelles (12) et le fond des cylindres intérieurs (11) des poignées (10) presentent chaqun une surface dentée réciproquement, et ou un meccanisme sélécteur (9) porte les deux surfaces des manivelles en contact ou les distance, en rendent les poignées (10) libres de tourner autor des manivelles (12) ou engagées avec dites manivelles.

4. Système de propulsion à bras pour byciclettes selon les revendications 1, 2 et 3, caractérisé en ce que des leviers de commande des freins sont disposés sur les manivelles avec le pivot de rotation en direction du canot de la fourche de la roue antérieure.

5. Système de propulsion à bras pour byciclettes selon les revendications 1, 2, 3 et 4, caractérisé en ce que les gaines des fils des freins sont guidées par la boite (8) du démoltiplicateur de façon telle à ne pas géner aucun mouvement du cycliste.
